# EUROPEAN PATENT SPECIFICATION

(11) **EP 3 312 449 B1**
(45) Date of publication and mention of the grant of the patent: **20.03.2019**
(21) Application number: 16195255.1
(22) Date of filing: 24.10.2016
(51) Int. Cl.: F16F 15/32, G01M 1/32

(54) **AUTOMATIC DISPENSER FOR BALANCING WEIGHTS**
AUTOMATISCHE AUSGABEVORRICHTUNG FÜR AUSWUCHTGEWICHTE
DISPOSITIF AUTOMATIQUE POUR LA DISTRIBUTION DES POIDS D'ÉQUILIBRAGE

(43) Date of publication of application: 25.04.2018
(73) Proprietor: Wegmann automotive GmbH & Co. KG, 97209 Veitshöchheim (DE)
(72) Inventor: Bürgel, Hans-Ulrich, 97849 Roden (DE)
(74) Representative: Lohr, Jöstingmeier & Partner

(56) References cited:
- EP-A1- 3 040 578
- JP-A- 2014 184 544
- JP-A- 2014 185 761
- US-A1- 2006 016 309

## Description

### Field of the invention

The invention relates to an automatic dispenser for balancing weights, preferably self- adhesive balancing weights. Such balancing weights may be used for balancing wheels of vehicles.

### Description of the related art

For balancing vehicle wheels, balancing weights are used. Self-adhesive balancing weights comprise segments of a mass material which may be a metal, like zinc or steel, having a self-adhesive tape at one side, by which the mass material may be held to a rim of a wheel. Multiple pieces or segments of such a mass material are held together by a strip of adhesive tape, forming a chain or a belt of balancing weights. The self-adhesive tape is protected by a liner, also called backing at the side opposite to the balancing weight segments. Before applying a balancing weight to a rim, the liner is removed.

US 3,960,409 shows such a belt of balancing weights which may have a significant length and which may be wound up to a coil to simplify storage.

EP 1 253 414 A2 discloses a complex dispensing device for balancing weights. Here, the liner is removed from the self-adhesive tape, then sections of balancing weight are cut from the tape and directly fed to an applicator. This device is intended for automatic tire balancing systems.

JP 2014 184544 discloses an automated dispenser for balancing weights having a cutting device for cutting a predetermined number of balancing weights from a belt of balancing weights. The balancing weights are guided by a guide towards the cutting apparatus.

US 2006/016309 A1 discloses an apparatus for dispensing a predetermined amount of adhesive weighted tape.

EP 3 040 578 A1 discloses an automatic dispenser for balancing weights comprises a transport section and a cutting section. The cutting section further has a knife movable from a first side of the belt of balancing weights to a second side, to separate the belt of balancing weights between two individual balancing weight segments at the cutter edge.

JP 2014 185761 A discloses a balancing weight transfer device using a sticking jig such that a balance weight can be assembled to a wheel at low cost.

In tire workshops, the mass required for balancing a wheel is determined by a balancing machine, and a corresponding number of balancing weight segments is manually cut off from a belt of balancing weights. Then the liner is removed and the balancing weight is applied to a rim. Manually counting the number of required balancing weight segments and cutting them off is time-consuming and prone to errors. To allow for manual handling, the balancing weight segments must have a minimum size which may be 10 or 5 grams. Lower masses would be difficult to handle, due to small size of the weight segments. This leads to a limited weight resolution and therefore to a limited balancing precision.

EP 3 040 578 discloses an automatic dispenser for balancing weights. A belt of balancing weight segments on a self-adhesive tape is moved by a driving belt to a cutting edge. After a selected number of balancing weight segments have passed the edge, a counter holder is pressed on the edge to form a 90 degree angle between two balancing weight segments. Then, a cutting knife is moved through the edge and under the counter holder to cut the tape and to separate the selected number of balancing weight segments from the belt.

### Summary of the invention

The problem to be solved by the invention is to provide a simple and inexpensive dispenser for balancing weights comprising at least one balancing weight segment on an adhesive tape further having a protective liner. The dispenser is configured to deliver a selected mass of self-adhesive balancing weight sections with high speed, and allows handling of small balancing weight segments. Furthermore, the liner should be in place at the self-adhesive tape to allow manual handling of the weight.

Solutions of the problem are described in the independent claims. The dependent claims relate to further improvements of the invention.

In a preferred embodiment, the dispenser comprises a transport section and a cutting section. The transport section is for transporting a belt of balancing weights to provide a certain amount or number of balancing weight segments which are cut off the belt by the cutting section. The transport section comprises at least one transport roller for moving the belt by friction. To increase friction, there may be a counter roller or a counter belt for pressing the belt of balancing weights against the transport roller. A counter belt may be held and/or driven by a first pulley and a second pulley.

To further increase friction, the transport roller has a plurality of teeth preferably at its outer circumferential surface. Preferably these teeth have a diameter and a length, such that they intrude through the liner into the adhesive tape. Most preferably, the teeth do not touch and/or damage the balancing weight segments. Experiments have shown, that this may generate enough friction to precisely pull upwards a long belt from a stock being at a significantly lower level than the drive section. The mass of balancing weights which have to be lifted from the stock may be of several kilograms. The teeth always allow a precise transport even with minimal slipping back of the belt. A precise transport is essential for quick and precise cutting at the cutting section as the cutting knife has to precisely fit into the gap between neighboring weight segments. The embodiment of cutting section as shown herein is more sensitive to position in accuracies of the belt as the bending angle of the belt balancing weights is smaller than the 90° angle known from prior art, and therefore the gap between neighboring balancing weights is smaller. Another advantage of the teeth is the perforation of the liner with small holes reducing adhesion of the liner which significantly simplifies removal of the liner before applying the balancing weight to a rim.

To improve the contact of the belt of balancing weights with the transport roller, and therefore to provide a good friction for transporting the belt of balancing weights, it is preferred, if the counter belt and/or the counter roller is pressed against the transport roller, which preferably may be done by a tensioner at the belt or at one or both of the pulleys.

It is further preferred to press the belt of balancing weights against the second transport roller by at least a second counter roller, which may be spring-loaded.

Preferably, the transport roller is driven by a motor, most preferably by a stepper motor. There may be a gear between the motor and the roller. A worm gear may be preferred, as this may block the belt from moving backwards due to the weight of the balancing weights between the stock and the drive section, when there is no power at the motor.

Preferably, the belt of balancing weight segments comprises a plurality of balancing weight segments which are held together by an adhesive tape for attaching the balancing weight segments to a rim of a wheel. A plurality of balancing weight segments may also be held together by an additional carrier like a plastic or metal tape or rod.

It is further preferred if there is a backing or liner to protect the adhesive surface of the adhesive tape opposing to the balancing weights.

It is further preferred, if the adhesive tape has at least one strengthening layer to increase the shear strength of the belt to simplify transport by the transport section.

Preferably, the belt of balancing weights is wound to a coil which supplies the transport section.

It is preferred, if the transport section pulls the balancing weights at the belt of balancing weights from a stock which may be a coil of balancing weights, and it pushes the balancing weights into the cutting section. It is preferred to have a slideway which may be part of the cutting section on which the balancing weights may slide horizontally.

It is further preferred, if the transport section forms an angle, which preferably is in the range between 70 and 110 degrees, and most preferably is a 90 degrees angle. It preferably receives balancing weights in a vertical direction, further redirecting the balancing weights to a horizontal direction. This may be done by curving the belt of balancing weights at least partially around a transport roller. Although the horizontal and vertical directions disclosed herein are preferred, the embodiments may be arranged in any other way.

For transporting a desired number of balancing weight segments, either the length of transported belt may be measured, or the number of balancing weight segments may be counted. Both methods may be used together to get an additional reference and to increase reliability. For determining the length of transported balancing weight belt, it is preferred to have a slot wheel having a plurality of slots which may be detected and/or counted by means of a photo sensor. The slot wheel preferably is connected to the transport roller, but may also be connected to any other roller or belt. Instead of a slot wheel, there may be any other means for detecting rotation, like a resolver or angle encoder. There may also be a drive motor driving at least one of the wheels, most preferably the second transport roller, which preferably has an angle encoder or which may be a stepper motor. In the case of a stepper motor, the number of steps is a measure of the transported length of balancing weights.

Alternatively or additionally, there may be at least one means for counting the number of balancing weight segments. This may be done by detecting the gaps between the balancing weight segments, for example by means of a photo sensor or any optical sensor. To increase the width of the gap, it is preferred to bend the belt of balancing weights. It is preferred to bend the belt of balancing weights around the transport roller, counting the balancing weights passing said first counter roller.

It is preferred, if the cutting section comprises a belt guide, against which the belt of balancing weights is pushed by the transport section. The belt guide is preferably arc shaped and forms a curve to bend the belt of balancing weights in a direction, such that the gap between neighboring balancing weight segments increases and a cutter can pass between said neighboring segments to cut the belt into sections, preferably by cutting the adhesive tape and/or liner. The belt guide performs a continuous forming of the belt which is much quicker and less time-consuming than moving a counter holder on the belt to form the belt. Due to the continuous movement of the belt at the belt guide and lack of any pressing force to the belt, the probability of damaging like scratching the surface of balancing weight segments is much smaller.

Preferably, the belt guide is arc shaped. It may have an inner contour of an arc segment which may guide the balancing weight segments. The radius of the arc segment may be in a range between 2 times and 20 times, preferably, between 5 and 10 times the thickness and/or length of a balancing weight segment. The angle of the arc segment preferably is in a range between 30° and 150°, most preferably 90°. Preferably, the arc is shaped such, that the belt transported in a horizontal plane is deflected downwards. Here, bending of the belt is supported by gravity.

The cutter preferably should easily pass between neighboring balancing weights to be separated. This allows to use less cutting force and avoids damage of the surface of the balancing weight segments. The cut sides of the balancing weight segments are outer sides which are later visible when applied to a wheel. Therefore, there should not be any scratches or other markings.

Preferably, the cutter has a knife guide holding a knife and being configured to move from one side of the belt of balancing weights to the other side. The knife may be guided between two balancing weight sections. Preferably, the knife is only able to cut the adhesive tape (including backing or liner) connecting the balancing weight sections. It is not designed for cutting the material of balancing weight sections, which may be steel or aluminum, or any other metal.

To avoid a blockage of the dispenser and/or damaging of the knife, it is preferred to have a position sensor for detecting gaps between neighbor balancing weights. Preferably, the position sensor is over or near the position of the knife and/or the cutting path of the knife, such it may detect the gap which is used by the knife for cutting. The position sensor may also be at least one balancing weight width distant from the knife position. If it is too far away, there may be changing distances between the detected position and an open gap due to mechanical tolerances and or stretching of the belt. The position sensor preferably is an optical sensor, but may be a magnetic sensor, an inductive sensor or any other sensor suitable for detecting a balancing weight segment and/or a gap between balancing weight segments.

For dispensing certain mass of balancing weights, first the required number of balancing weight segments may be calculated, unless this is already known. Further, the motor may be operated for certain time, for certain number of steps in the case of a stepper motor to push the required number of balancing weight segments towards the belt guide. Preferably, the motion of the motor is stopped, if after the required number of balancing weight segments have passed and the position sensor has detected a gap. When, preferably the knife is operated to move through the gap and to separate the required number of balancing weight segments from the belt.

Bending the belt by the belt guide further reduces stress to the adhesive tape. If the balancing weight segments would simply be pushed apart to produce a gap between two balancing weight segments, the comparatively flexible self-adhesive tape or foam would expand in length, while the less flexible backing or liner would tear or at least separate from the tape. This is prevented by the bending as disclosed above. For manually handling the cut balancing weight segments it is essential, that the liner remains in place. Otherwise, the cut segments would immediately stick to a tray into which the dispenser delivers the cut segments.

After a certain number of balancing weight segments have been cut by the cutter, they may slide and/or fall driven by gravity along the preferably vertical side of the cutter base and fall into a tray, from which they may be taken out and attached to a rim of a wheel.

The cutting section and the transport section preferably are used together as described herein. Alternatively, it is preferred to use the cutting section without or with a different transport section. For example, the transport section may be simplified and use only a first transport roller and a first counter roller to generate the required friction to the belt of balancing weights.

The embodiments described herein allow for automatic cutting of required mass sections form a belt of balancing weights. Due to the automatic transport and cutting a high speed can be achieved and a large number of balancing weight can be processed in a short time interval. Furthermore standard size segments of balancing weights as well as smaller and even significantly smaller segments can be processed. This may result in a much better balancing mass resolution compared to manual processing. Conventional balancing weight segments often are designed to have a size which can easily be handled. Therefore, lightweight segments may be comparatively thin, resulting in a larger surface, which can better be gripped or they may be made of a low density material resulting in a larger size. By the embodiments, the balancing weight segments may have very small sizes as there is no need to increase size for manual handling of every segment.

Due to the automated cutting, a more stable and robust adhesive tape may be used. It may even have a robust support layer included. While it may be impossible to make a manual clean cut for separating segments, the automated cutting with a guided knife and the balancing weights held in a predetermined position at the cutter edge will result in a precise cut. Furthermore, the size of the balancing weight segments may be reduced to sizes like 5g, 2g, 1g or less. This increases resolution and therefore balancing precision. Such small sizes can only be handled by an automated dispenser as they are too small for manual handling.

A further embodiment relates to a method for delivery of cut sections of balancing weights. The method comprises the steps of transporting a certain number of balancing weight segments being part of a belt of balancing weights to a belt guide, bending the balancing weights extending such that a gap opens between two adjacent balancing weight segments and moving a knife from one side of the belt of the balancing weights to the other side of the belt of balancing weights, and therefore cutting a section of cut balancing weights from the belt of balancing weights.

### Description of Drawings

In the following the invention will be described by way of example, without limitation of the general inventive concept, on examples of embodiment with reference to the drawings.
Figure 1 shows a preferred embodiment.
Figure 2 shows an alternate embodiment.
Figure 3 shows a transport roller in detail.
Figure 4 shows a sectional view of the slideway.
Figure 5 shows the operation of the cutter.
Figure 6 shows the cutter in an idle state.

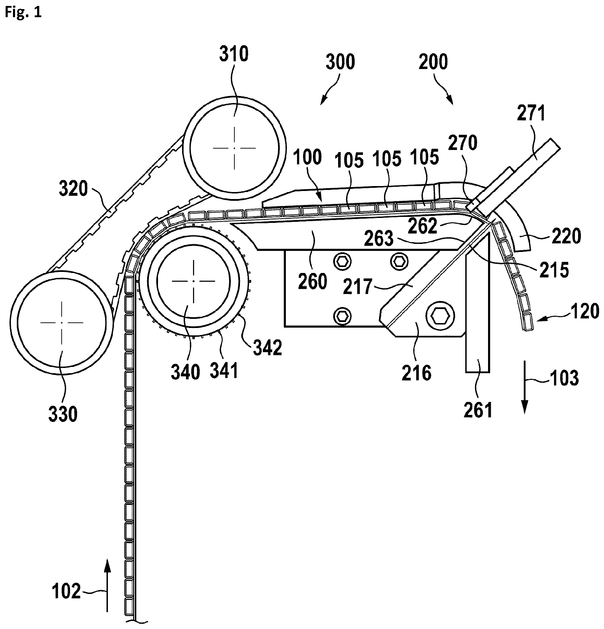

In Figure 1, a preferred embodiment is shown in a side view. The dispenser comprises a transport section 300 and a cutting section 200. A belt of balancing weights 100 is fed by a drive mechanism to a cutter, where desired portions of mass material are cut from the belt. In this embodiment, a belt of balancing weights 100 comprising of a plurality of individual balancing weight segments 105, is fed at the left side in feeding direction 102 into the transport section of the dispenser. There may be a coil (not shown) for supplying the balancing weights. Preferably, a transport roller 340 is provided for transporting the belt having balancing weight segments, which preferably are coming from an approximately vertical direction preferably into an approximately horizontal direction, for easier cutting. A counter belt 320, which preferably is suspended between a first pulley 310 and a second pulley 330, preferably presses the belt of balancing weights 100 against the transport roller 340, and therefore generates friction to the belt of balancing weights. Friction is increased by teeth 341, 342 at the transport roller. It is preferred, if at least the transport roller 340 is driven by a motor (not shown). To determine the precise amount of balancing weight mass material, which has been transported, an angle encoder or counter may be provided.

After passing the transport roller, the balancing weights are pushed in an approximately horizontal direction, and are guided by a slideway 260. The slideway 260 has an end section 263 and preferably a curved section 262 close before the end section 263. Cutting is preferably done by a knife 215 which passes close to the end section 263. Preferably, the knife is held by a knife holder 216 and may be locked to the knife holder by a counter holder 217.

Before cutting, the belt section of balancing weights 120 to be cut off of the belt is bent to an angle of 90° or less by pushing the belt against a curved belt guide 220. Bending may further be supported by the curved section 262 of the slideway 260.

The balancing weights of the curved belt form a gap between adjacent balancing weights which allows the knife 215 to slide between two adjacent balancing weights. After forming the angle, the cutter comprising a knife 215 is moved from one side to the other side through the belt of balancing weights, cutting the adhesive tape between two balancing weight segments, without cutting the balancing weight segments themselves, and therefore separating a section of cut balancing weights 120 from the belt of balancing weights 100.

To transport and/or position the belt, such that the knife exactly passes through a gap between adjacent balancing weights, it is preferred to provide a position sensor 270 which may be held by a sensor holder 271. Preferably, the sensor is arranged such, that it detects the gap to be used by the knife or a neighbored gap. The sensor may be an optical or magnetic sensor.

After cutting, a section of cut balancing weights 120 slides or falls down along sidewall 261 in a direction as indicated by arrow 103, and may be delivered to a tray from which either a robot or a person may take out the balancing weight for applying it to a wheel.

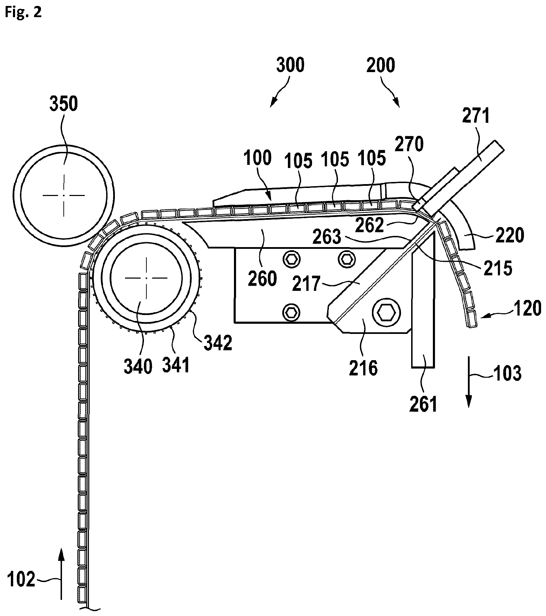

Figure 2 shows an alternate embodiment, similar to the embodiment above. Here, instead of the counter belt a counter roller 350 is provided.

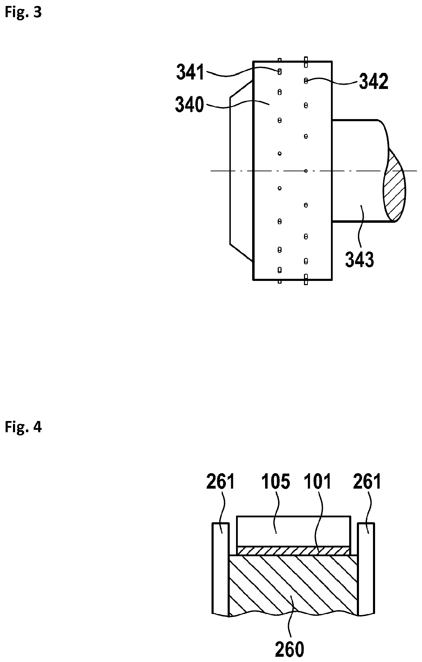

Figure 3 shows a transport roller in detail. The transport roller 340 preferably is driven via a driveshaft 343 by a motor (not shown) and via an optional gearbox (not shown). Preferably, the transport roller is cylindrically shaped. It has a plurality of teeth 341, 342 or spikes at its outer circumference. These teeth penetrate into the adhesive tape of the belt of balancing weights and improve friction for precise transport of the belt. Preferably, there are multiple rows of teeth which may be displaced against each other.

Figure 4 shows a sectional view of the slideway. The slideway 260 may have at least one sidewall 261 to prevent the belt from sliding of the slideway. At the top of the slideway a belt of balancing weights comprising multiple balancing weight segments 105 on an adhesive tape 101 may be pushed forward by the transport roller 340.

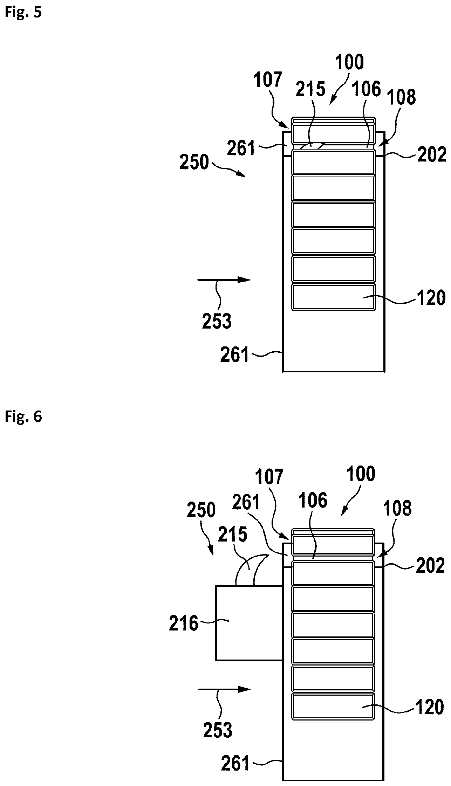

In Figure 5, the operation of the cutter 250 comprising a knife holder 216 with attached knife 215 is shown. This image is a sectional view from right side of Figure 1 to the cutter, where the counter holder has been omitted. Due to bending the belt of balancing weights, a gap 106 forms at the cutter edge 202, through which a knife 215, which is attached to a knife holder 216, is moved in direction 253 from a first side 107 of the belt of balancing weights to the second side 108 to separate the section of cut balancing weights 120 from the belt of balancing weights 100.

In Figure 6, the cutter 250 is shown in an idle state, where the knife 215 is outside of the belt of balancing weights.

### List of reference numerals

- 100: belt of balancing weights
- 101: adhesive tape
- 102: balancing weight feeding direction
- 103: balancing weight delivery direction
- 105: balancing weight segment
- 106: gap between balancing weight segments
- 107: first side
- 108: second side
- 120: cut balancing weights
- 200: cutting section
- 215: knife
- 216: knife holder
- 217: knife counter holder
- 220: belt guide
- 250: cutter
- 253: cutter movement
- 260: slideway
- 261: sidewall
- 262: curved section
- 263: end section
- 270: position sensor
- 271: sensor holder
- 300: transport section
- 310: first pulley
- 320: counter belt
- 330: second pulley
- 340: transport roller
- 350: counter roller
- 341: first teeth
- 342: second teeth

## Claims

1. Automatic dispenser for balancing weights comprising a transport section (300) and a cutting section (200),
**characterized in, that**
the transport section comprises a transport roller (340) having a plurality of teeth (341, 342) at its circumferential outer surface generating friction to a belt of balancing weights (100) comprising a plurality of individual balancing weight segments (105), for transporting the belt of balancing weights (100) to the cutting section,
the cutting section having an arc shaped belt guide (220) for forming the belt of balancing weights to a curve thus opening at least one gap between neighboring balancing weight segments,
the cutting section further having a knife (215) movable from a first side (107) of the belt of balancing weights to a second side (108), to separate the belt of balancing weights between two individual balancing weight segments (105) at a gap.

2. Automatic dispenser for balancing weights according to claim 1,
**characterized in that**
a counter roller (350) and/or a counter belt (320) is provided to press the belt against the transport roller (340) for increasing friction.

3. Automatic dispenser for balancing weights according to any one of the preceding claims,
**characterized in that**
a sensor (270) is provided for detecting gaps between individual balancing weights.

4. Automatic dispenser for balancing weights according to claim 3,
**characterized in that**,
the sensor (270) is mounted at a location at the cutting path of the knife (215).

5. Automatic dispenser for balancing weights according to claim 3 or 4,
**characterized in that**,
the signal of the sensor (270) is used for counting the number of balancing weights.

6. Automatic dispenser for balancing weights according to any one of the preceding claims,
**characterized in that**
the individual balancing weight segments (105) comprise a metal like zinc or steel.

## Patentansprüche

1. Automatischer Spender für Auswuchtgewichte, umfassend einen Transportabschnitt (300) und einen Schneideabschnitt (200),
**dadurch gekennzeichnet, dass**
der Transportabschnitt eine Transportwalze (340) mit einer Vielzahl von Zähnen (341, 342) an seiner umlaufenden Außenfläche umfasst, welche Reibung erzeugen an einem Gurt aus Auswuchtgewichten (100), der eine Vielzahl einzelner Auswuchtgewichtsegmente (105) umfasst, um den Gurt aus Auswuchtgewichten (100) zu dem Schneideabschnitt zu transportieren,
wobei der Schneideabschnitt eine bogenförmige Gurtführung (220) aufweist, um den Gurt mit Auswuchtgewichten zu einer Kurve zu formen, wodurch mindestens eine Lücke zwischen benachbarten Auswuchtgewichtsegmenten geöffnet wird,
wobei der Schneidabschnitt weiterhin ein Messer (215) aufweist, das von einer ersten Seite (107) des Gurts mit Auswuchtgewichten zu einer zweiten Seite (108) beweglich ist, um den Gurt der Auswuchtgewichte zwischen zwei einzelnen Auswuchtgewichtsegmenten (105) in einer Lücke zu trennen.

2. Automatischer Spender für Auswuchtgewichte nach Anspruch 1,
**dadurch gekennzeichnet, dass**
eine Gegenwalze (350) und/oder ein Gegengurt (320) vorgesehen ist, um den Gurt zur Erhöhung der Reibung gegen die Transportwalze (340) zu drücken.

3. Automatischer Spender für Auswuchtgewichte nach einem der vorhergehenden Ansprüche,
**dadurch gekennzeichnet, dass**
ein Sensor (270) zum Erfassen von Lücken zwischen einzelnen Auswuchtgewichten vorgesehen ist.

4. Automatischer Spender für Auswuchtgewichte nach Anspruch 3,
**dadurch gekennzeichnet, dass**
der Sensor (270) an einer Stelle am Schneidweg des Messers (215) angeordnet ist.

5. Automatischer Spender für Auswuchtgewichte nach Anspruch 3 oder 4,
**dadurch gekennzeichnet, dass**
das Signal des Sensors (270) zum Zählen der Anzahl von Auswuchtgewichten verwendet wird.

6. Automatischer Spender für Auswuchtgewichte nach einem der vorhergehenden Ansprüche,
**dadurch gekennzeichnet, dass**
die einzelnen Auswuchtgewichtsegmente (105) ein Metall wie Zink oder Stahl umfassen.

## Revendications

1. Distributeur automatique de poids d'équilibrage comprenant une section de transport (300) et une section de découpe (200),
**caractérisé en ce que**
la section de transport comprend un rouleau de transport (340) ayant une pluralité de dents (341, 342) au niveau de sa surface extérieure circonférentielle générant un frottement sur une courroie de poids d'équilibrage (100) comprenant une pluralité de segments de poids d'équilibrage individuels (105), pour transporter la courroie de poids d'équilibrage (100) jusqu'à la section de découpe,
la section de découpe ayant un guide de courroie en arc (220) pour former la courroie de poids d'équilibrage en une courbe ouvrant ainsi au moins un écartement entre des segments de poids d'équilibrage voisins,
la section de découpe ayant en outre un couteau (215) mobile depuis un premier côté (107) de la courroie de poids d'équilibrage jusqu'à un second côté (108), pour séparer la courroie de poids d'équilibrage entre deux segments de poids d'équilibrage individuels (105) au niveau d'un écartement.

2. Distributeur automatique de poids d'équilibrage selon la revendication 1,
**caractérisé en ce que**
un contre-rouleau (350) et/ou une contre-courroie (320) sont prévus pour appuyer la courroie contre le rouleau de transport (340) pour augmenter le frottement.

3. Distributeur automatique de poids d'équilibrage selon l'une quelconque des revendications précédentes,
**caractérisé en ce que**
un capteur (270) est prévu pour détecter des écartements entre des poids d'équilibrage individuels.

4. Distributeur automatique de poids d'équilibrage selon la revendication 3,
**caractérisé en ce que**,
le capteur (270) est monté en un emplacement au niveau du trajet de découpe du couteau (215).

5. Distributeur automatique de poids d'équilibrage selon la revendication 3 ou 4,
**caractérisé en ce que**,
le signal du capteur (270) est utilisé pour compter le nombre de poids d'équilibrage.

6. Distributeur automatique de poids d'équilibrage selon l'une quelconque des revendications précédentes,
**caractérisé en ce que**
les segments de poids d'équilibrage individuels (105) comprennent un métal de type zinc ou acier.
